# FASCICULE DE BREVET EUROPEEN

(11) **EP 0 734 458 B1**
(45) Date de publication et mention de la délivrance du brevet: **03.03.1999**
(21) Numéro de dépôt: 95901457.2
(22) Date de dépôt: 30.11.1994
(51) Int. Cl.: C21C 5/52, F27B 3/18, F27D 3/14

(54) **DISPOSITIF DE CHARGEMENT POUR ALIMENTER EN METALIQUIDE UN FOUR ELECTRIQUE**
VORRICHTUNG ZUM BESCHICKEN EINES ELEKTROFENS MIT FLÜSSIGMETALL
LOADING DEVICE FOR FEEDING LIQUID METAL INTO AN ELECTRIC FURNACE

(30) Priorité: 15.12.1993 LU 88440; 20.07.1994 LU 88517
(43) Date de publication de la demande: 02.10.1996
(73) Titulaire: PAUL WURTH S.A., 1122 Luxembourg (LU)
(72) Inventeur: KAELL, Norbert, L-4625 Differdange (LU); FRIES, Daniel, B-6700 Arlon (BE); DEVILLET, Serge, L-9142 Buerden (LU)
(74) Mandataire: Freylinger, Ernest T.
(86) Numéro de dépôt international: EP9403970
(87) Numéro de publication internationale: WO9516796

(56) Documents cités:
- EP-A- 0 487 494
- DE-A- 3 616 157
- DE-B- 1 182 679
- FR-A- 1 376 862

## Description

L'invention concerne un dispositif de chargement d'un métal en fusion dans un four électrique.

Une grande partie du recyclage de la ferraille est effectuée à l'aide de fours électriques tels que des fours à arc. Ces fours permettent de faire fondre et de réutiliser la ferraille ainsi traitée pour fabriquer de nouveaux produits en acier tels que des poutres etc.

Un certain nombre d'éléments résiduels contenus dans la ferraille tels que le cuivre, le nickel, etc., ne peuvent être séparés de l'acier et se retrouvent par conséquent dans les produits finis. Plus la ferraille a subi des opérations de recyclage, plus importante sera la concentration de ces éléments résiduels. Ces derniers constituent une gêne pour la fabrication de certains produits tels que les tôles etc.

Un moyen de diminuer la concentration en éléments résiduels dans l'acier obtenu à partir de ferraille consiste à ajouter de la fonte liquide directement dans le four électrique. Cette méthode nécessite l'enlèvement du couvercle du four électrique. Il faut donc interrompre le processus de fusion de la ferraille, déplacer le couvercle et verser la fonte liquide dans le four électrique sur la ferraille partiellement fondue. Lors de cette opération, de grandes quantités de poussières sont libérées dans l'atmosphère et une partie de la fonte ou de l'acier partiellement fondu est projetée en dehors du four. De plus, l'impact de la fonte liquide risque d'endommager les panneaux de refroidissement revêtant l'intérieur du four. Il est évident que cette technique est insalubre, dangereuse et réduit la productivité du four. Le document EP-A-487494 décrit un dispositif de chargement comprenant une partie élargie en forme d'un balcon pour l'introduction de métal liquide dans un four électrique.

Le but de la présente invention est de proposer un dispositif permettant d'éviter des dommages au four occasionnés par des projections de fonte lors de l'introduction de la fonte liquide et de minimiser les déperditions calorifiques.

Selon la présente invention, ce but est atteint par un dispositif de chargement pour alimenter en métal liquide un four électrique muni d'une cuve, ledit dispositif comprenant un balcon prolongeant latéralement la cuve du four, ledit balcon étant recouvert à l'intérieur par un revêtement composé d'un matériau réfractaire.

Le dispositif est **caractérisé par** un couvercle muni d'un revêtement réfractaire situé au-dessus dudit balcon, ledit couvercle formant, en position ouverte, un bouclier de protection pour une partie du four (10) adjacente audit dispositif.

Dans le dispositif de chargement selon l'invention, la fonte n'est plus directement déversée dans la cuve du four électrique (à partir d'une poche p.ex.), mais est introduite par un balcon latéral, en saillie, communiquant avec la sole du four électrique. On n'a donc plus besoin de retirer le couvercle du four et d'interrompre le processus de fusion de la ferraille pendant l'introduction de la fonte. La productivité du four est augmentée car l'enfournement de la fonte se fait en temps masqué. La durée de vie des panneaux de refroidissement de la cuve du four est augmentée car la fonte n'est plus projetée contre ces panneaux lors de l'enfournement.

Aussi limite-t-on les émissions de poussières dans l'atmosphère car la fonte liquide entre en contact avec la ferraille en-dessous du couvercle du four électrique. Par conséquent, les poussières générées sont aspirées et traitées par le système de filtration du four.

De plus, on peut entamer l'affinage du métal en fusion par injection d'oxygène dès le début du cycle de production.

La face intérieure dudit balcon est entièrement recouverte par un matériau réfractaire afin de protéger le balcon contre la chaleur de la fonte liquide. De préférence, le fond du balcon est maçonné avec une plaque de choc en réfractaire spécial afin d'éviter son usure prématurée.

On appréciera également le fait que le balcon d'alimentation comporte un couvercle muni d'un revêtement en un matériau réfractaire qui minimise les pertes calorifiques et qui forme un bouclier de protection pour une partie du four adjacent audit dispositif lorsqu'il est ouvert. De cette façon, le four est protégé contre les projections de fonte liquide lors de l'enfournement.

De préférence, le balcon latéral d'alimentation sera aménagé à proximité du trou de coulée. Cette disposition offre l'avantage que la porte du four peut rester fermée pendant l'addition de fonte liquide. Les opérations classiques qui se font par la porte ne sont pas gênées.

Pour éviter que la fonte liquide ne coule directement du balcon latéral dans le trou de coulée et ne complique ainsi l'opération de coulée en poche, un canal d'écoulement peut être aménagé dans le réfractaire de la sole du balcon latéral jusqu'au centre du four.

Accessoirement, un surélèvement ou une digue peut être aménagé entre le canal d'écoulement et le trou de coulée de manière à dévier la fonte du trou de coulée.

La disposition du balcon d'enfournement de la fonte à proximité du trou de coulée et la possibilité de verser une quantité précise de fonte permettant également de verser une partie du métal liquide contenu dans la poche directement dans la poche à acier destiné à recevoir l'acier fondu en provenance du four, ceci dans le but de mettre à nuance cet acier destiné à recevoir l'acier fondu en provenance du four. De cette façon, on économise de l'énergie et on récupère des éléments d'alliage (C, Mo, Si).

Selon un mode de réalisation avantageux, un barrage est situé entre le balcon et la cuve du four électrique qui a pour effet de créer, dans la partie inférieure du balcon, un fond de métal en fusion pendant tout le déversement de la fonte dans le balcon latéral. De cette manière, les projections de fonte liquide lors du déversement sont limitées.

Le barrage est, de préférence, amovible. Il peut alors être remplacé facilement lorsqu'il est usé.

Avantageusement, le barrage comporte une ou plusieurs ouvertures pratiquées dans la base dudit barrage pour permettre la vidange dudit balcon à la fin de l'enfournement de la fonte.

Des avantages et caractéristiques supplémentaires ressortiront de la description détaillée des modes de réalisation avantageux de l'invention, présentés ci-dessous, à titre d'illustration exclusivement, en se référant aux dessins annexés, dans lesquels:
- la Figure 1 est une coupe longitudinale à travers un four électrique comprenant un dispositif de chargement pour fonte liquide.
- la Figure 2 montre une vue du dessus d'un four électrique,
- la Figure 3 représente une coupe selon la ligne III - III de la Figure 2.
- la Figure 4 représente une coupe longitudinale à travers un four électrique comprenant un dispositif de chargement pour fonte liquide équipé d'un barrage.
- la Figure 5 représente une coupe dans le four de la Figure 4 au niveau du trou de coulée.
- la Figure 6 représente une coupe selon la ligne III - III de la Figure 5.

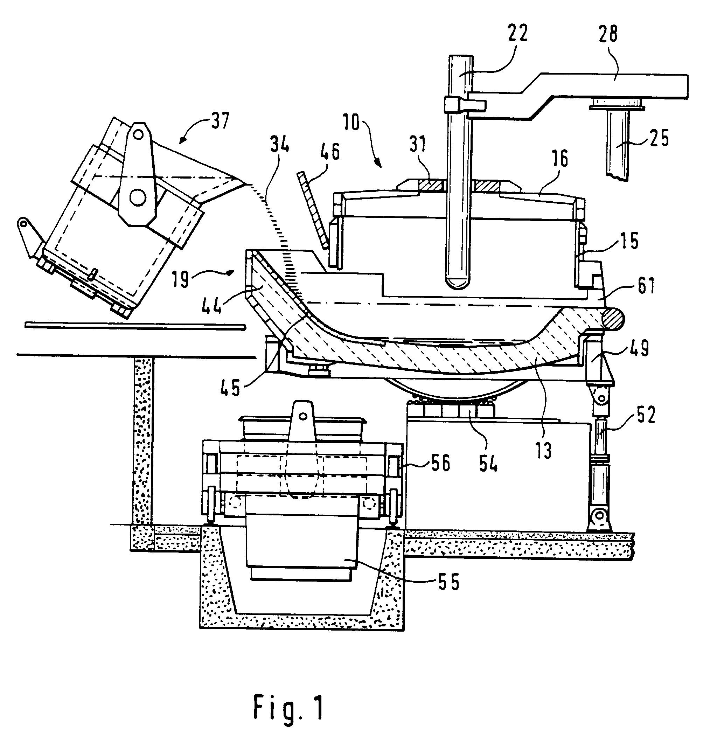

La Figure 1 montre un four électrique 10 comprenant une sole 13 en un matériau réfractaire, surmontée d'une cuve 15 et d'un couvercle 16 ainsi qu'un balcon latéral 19 ou bec d'enfournement pour alimenter le four 10 en fonte liquide.

Pour charger le four en ferraille, le couvercle 16 est retiré, puis la ferraille est déversée dans la cuve du four. Lorsque la cuve 15 est remplie de ferraille, le couvercle 16 est replacé sur la cuve 15 et au moins une électrode 22 montée sur un mât 25 par l'intermédiaire d'un bras 28, est introduite dans le four 10 à travers une ouverture 31 pratiquée dans le couvercle 16. Le bras 28 peut coulisser sur le mât 25 de façon à pouvoir monter et descendre avec l'électrode 22.

Une poche à fonte 37 est amenée près du balcon latéral 19 moyennant une grue ou un chariot basculeur (non représenté). La poche 37 est inclinée et la fonte liquide 34 est déversée dans le balcon latéral 19.

Le balcon latéral 19 est équipé d'un revêtement composé d'un matériau réfractaire 44 et le fond de celui-ci est maçonné avec une plaque de choc 45 en réfractaire spécial de façon à protéger le balcon 19 contre l'usure.

Un couvercle 46 limite la déperdition calorifique du four via le balcon 19. Le couvercle 46, lorsqu'il est ouvert pendant l'enfournement de la fonte liquide, protège le four contre les projections de fonte liquide 34.

Le four 10 est monté sur un berceau 49 qui permet de le pencher au moyen d'un vérin hydraulique 52. Lorsque le vérin 52 est rentré, le berceau 49 et le four 10 basculent sur leur siège basculant 54 situé en dessous du berceau 49. Le four 10 est équilibré de telle sorte qu'il revient en position horizontale même si le circuit hydraulique alimentant le vérin 52 tombait en panne.

Lorsque la ferraille est fondue, l'acier liquide est déversé dans une poche à acier 55 via un trou de coulée 58. Cette poche 55 est montée sur un chariot 56 sur rails et est amenée en dessous du trou de coulée 58.

Les scories sont évacuées par une porte de décrassage 61 latérale en penchant le four 10 sur son siège 54.

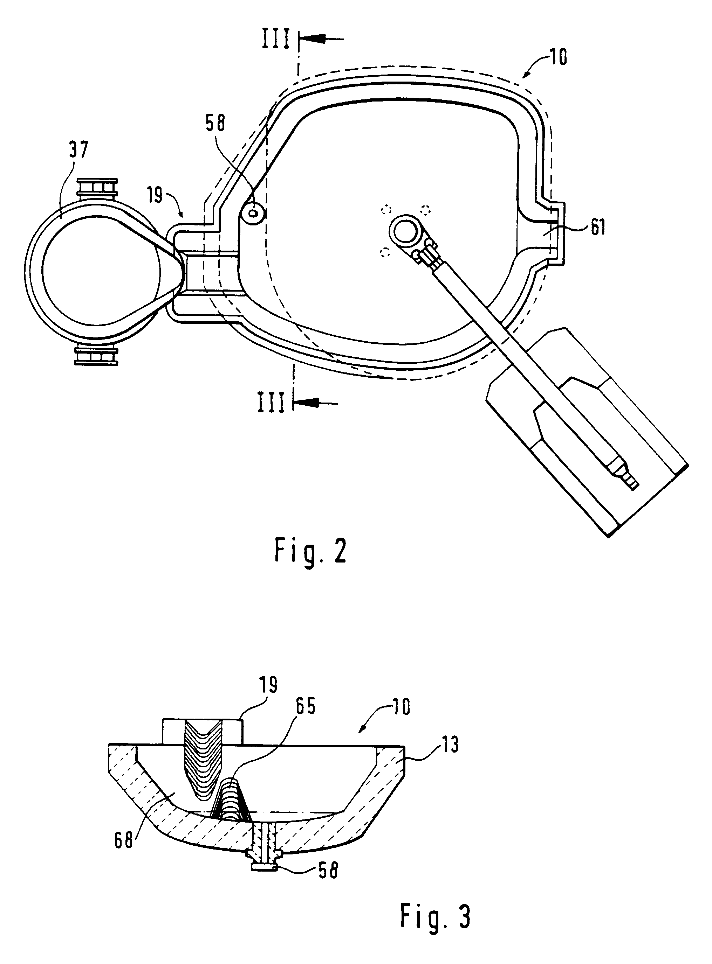

La Figure 2 montre une vue du dessus du four 10. Sur cette figure on voit la position du balcon latéral 19 par rapport au trou de coulée 58. Le balcon est décalé latéralement par rapport au trou de coulée 58 afin d'éviter que la fonte liquide ne se déverse directement dans ce dernier mais coule plutôt vers le centre du four 10.

Sur la Figure 3, une coupe selon la ligne III-III' de la Figure 2, on voit une digue 65 délimitant un canal d'écoulement 68 pour la fonte liquide.

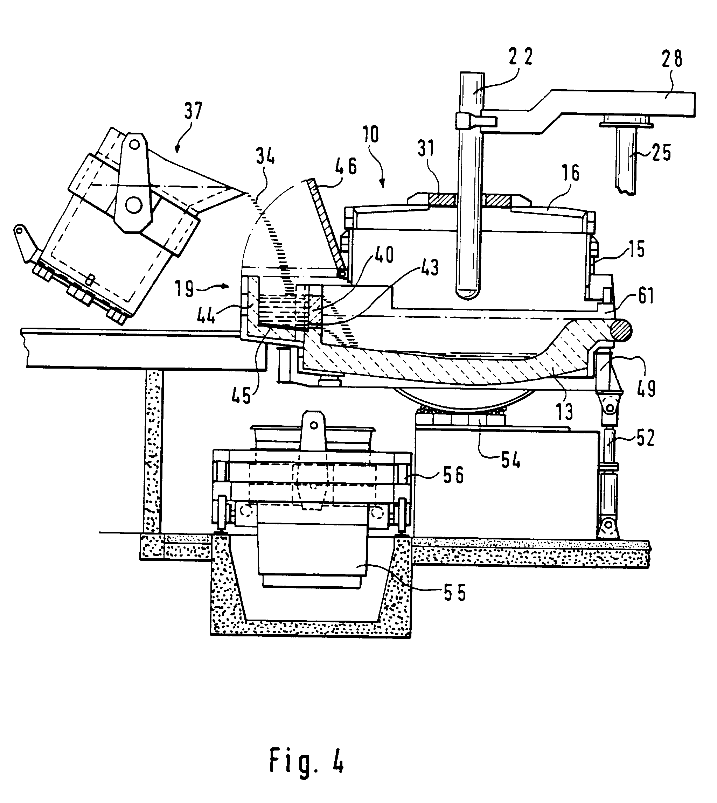

Sur la Figure 4, représentant un mode de réalisation préféré dans lequel le balcon latéral 19 est délimité de la cuve du four 10 par un barrage 40 qui retient passagèrement la fonte 34. Le balcon 19 est rempli jusqu'à la hauteur du barrage 40 et la fonte 34 se jette ensuite au dessus du barrage 40 dans la sole 13. A la base du barrage 40 sont pratiquées une ou plusieurs ouvertures 43 qui permettent de vidanger le balcon 19 à la fin de l'enfournement de la fonte 34. Pour maintenir un lit de coulée dans le balcon 19, il suffit de régler le débit de fonte 34 alimentant le balcon 19 de façon à ce qu'il soit supérieur au débit de la fonte passant par les ouvertures 43 pratiquées à la base du barrage 40.

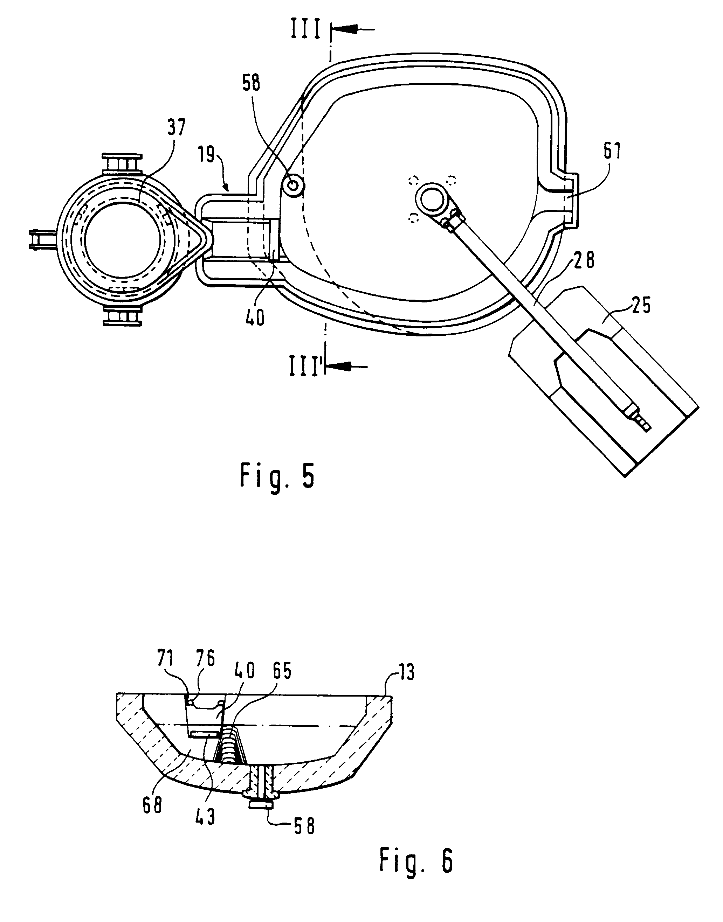

Sur la Figure 5 on voit que le barrage 40 se situe dans des glissières verticales 71 qui permettent de le remplacer aisément lorsqu'il est usé. Le barrage 40 comprend deux anses 76 par lesquelles on peut le retirer des glissières.

Sur la Figure 6, une coupe selon la ligne III-III' de la Figure 5, on voit une digue 65 délimitant un canal d'écoulement 68 pour la fonte liquide. Le barrage 40 se situe dans des glissières verticales 71 qui permettent de le remplacer aisément lorsqu'il est usé. Le barrage comprend deux anses 76 par lesquelles on peut le retirer des glissières 71.

## Revendications

1. Dispositif de chargement pour alimenter en métal liquide un four électrique muni d'une cuve (15),
ledit dispositif comprenant un balcon (19) prolongeant latéralement la cuve (15) du four (10), ledit balcon (19) étant recouvert à l'intérieur par un revêtement (44) composé d'un matériau réfractaire
**caractérisé par** un couvercle (46) muni d'un revêtement réfractaire situé au-dessus dudit balcon (19), ledit couvercle (46) formant, en position ouverte, un bouclier de protection pour une partie du four (10) adjacente audit dispositif.

2. Dispositif selon la revendication 1, caractérisé par une plaque de choc (45) en réfractaire, maçonnée, recouvrant le fond du balcon latéral (19).

3. Dispositif selon l'une quelconque des revendications 1 ou 2, caractérisé en ce que le dispositif est aménagé à proximité d'un trou de coulée (58) du four (10).

4. Dispositif selon l'une quelconque des revendications 1 à 3, caractérisé en ce qu'un canal d'écoulement (68) est aménagé dans le réfractaire de la sole (13) du balcon latéral (19) jusqu'au centre du four (10).

5. Dispositif selon la revendication 4, caractérisé par une digue (65) aménagée entre le canal d'écoulement (68) et le trou de coulée (58).

6. Dispositif selon l'une quelconque des revendications 1 à 5, caractérisé en ce que le balcon est délimité de la cuve du four d'une part, par un barrage (40) conçu de manière à retenir au moins passagèrement le métal en fusion et d'autre part, par une communication permettant l'écoulement par gravité d'au moins une partie dudit métal en fusion déversé dans le balcon (19) vers ladite cuve (15).

7. Dispositif selon la revendication 6 caractérisé en ce que le barrage (40) est amovible.

8. Dispositif selon l'une quelconque des revendications 6 ou 7, caractérisé par une ou plusieurs ouvertures (43) pratiquées dans la base dudit barrage (40) pour permettre la vidange dudit balcon.

## Patentansprüche

1. Vorrichtung zum Beschicken eines mit einer Wanne (15) versehenen Elektroofens mit Flüssigmetall,
wobei die Vorrichtung einen Balkon (19) aufweist, der die Wanne (15) des Ofens (10) seitlich verlängert, wobei der Balkon (19) im Inneren mit einem aus einem feuerfesten Material bestehenden Belag (44) bedeckt ist,
gekennzeichnet durch einen mit einem feuerfesten Belag versehenen Deckel (46), der über dem Balkon (19) angeordnet ist, wobei der Deckel (46) in der offenen Position einen Schutzschild für einen an die Vorrichtung angrenzenden Teil des Ofens (10) bildet.

2. Vorrichtung gemäß Anspruch 1, gekennzeichnet durch eine gemauerte Aufprallplatte (45) aus feuerfestem Material, die den Boden des seitlichen Balkons (19) bedeckt.

3. Vorrichtung gemäß irgendeinem der Ansprüche 1 oder 2, dadurch gekennzeichnet, daß die Vorrichtung in der Nähe eines Abstichlochs (58) des Ofens (10) angeordnet ist.

4. Vorrichtung gemäß irgendeinem der Ansprüche 1 bis 3, dadurch gekennzeichnet, daß in dem feuerfesten Material der Sohle (13) des seitlichen Balkons (19) bis zu der Mitte des Ofens (10) ein Abflußkanal (68) angebracht ist.

5. Vorrichtung gemäß Anspruch 4, gekennzeichnet durch einen Deich (65), der zwischen dem Abflußkanal (68) und dem Abstichloch (58) angebracht ist.

6. Vorrichtung gemäß irgendeinem der Ansprüche 1 bis 5, dadurch gekennzeichnet, daß der Balkon von der Wanne des Ofens abgegrenzt ist durch einerseits einen Staudamm (40), der so entworfen ist, daß er das schmelzflüssige Metall zumindest vorübergehend zurückhält, und andererseits eine Verbindung, die das Abfließen von mindestens einem Teil des in den Balkon (19) gegossenen, schmelzflüssigen Metalls infolge der Schwerkraft zur Wanne (15) ermöglicht.

7. Vorrichtung gemäß Anspruch 6, dadurch gekennzeichnet, daß der Staudamm (40) herausnehmbar ist.

8. Vorrichtung gemäß irgendeinem der Ansprüche 6 oder 7, gekennzeichnet durch eine oder mehrere Öffnungen (43), die in der Basis des Staudamms (40) vorgesehen sind, um die Entleerung des Balkons zu ermöglichen.

## Claims

1. Charging device for supplying liquid metal to an electric furnace with a shaft (15),
said device comprising a balcony (19) extending the furnace shaft (15) laterally, said balcony (19) being covered internally with a coating (44) made of a refractory material,
**characterised by** a cover (46), equipped with a refractory coating, located above said balcony (19), said cover (46) forming in an open position a protection shield for a part of the furnace (10) adjacent to said device.

2. Device according to Claim 1, characterised in that the bottom of the lateral balcony (19) is faced with an impact plate (45) made of a refractory material.

3. Device according to any one of Claims 1 or 2, characterised in that the device is positioned near a tap hole (58) of the furnace (10).

4. Device according to any one of Claims 1 to 3, characterised in that a flow channel (68) is made in the refractory of the hearth (13) from the lateral balcony (19) to the centre of the furnace (10).

5. Device according to Claim 4, chracterised by a dam (65) positioned between the flow channel (68) and the tap hole (58).

6. Device according to any one of Claims 1 to 5, characterised in that the balcony is demarcated from the shaft of the furnace on the one hand by a barrier (40) designed so as to retain at least temporarily the molten metal and on the other hand by a communication allowing the flow under gravity of at least a part of the said molten metal poured into the balcony (19) towards the said shaft (15).

7. Device according to Claim 6, characterised in that the barrier (40) is detachable.

8. Device according to either of Claims 6 or 7, characterised by one or more openings (43) made in the base of the said barrier (40) in order to allow the said balcony to be emptied.
